# EUROPÄISCHE PATENTSCHRIFT

(11) **EP 1 997 547 B1**
(45) Veröffentlichungstag und Bekanntmachung des Hinweises auf die Patenterteilung: **20.10.2010**
(21) Anmeldenummer: 07010887.3
(22) Anmeldetag: 01.06.2007
(51) Int. Cl.: B01D 46/04

(54) **Verfahren zum Rückspülen von Filtern**
Method for filter backflushing
Procédé destiné au rétrolavage de filtres

(43) Veröffentlichungstag der Anmeldung: 03.12.2008
(73) Patentinhaber: Balcke-Dürr GmbH, 40882 Ratingen (DE)
(72) Erfinder: Holten, Wolfgang, 40629 Düsseldorf (DE); Hoffmann, Horst, 40882 Ratingen (DE); Kalka, Arnold, 45711 Datteln (DE); Kordas, Friedel, 45663 Recklinghausen (DE); Podhorsky, Miroslav, Dr., 40882 Ratingen (DE)
(74) Vertreter: Lang, Friedrich

(56) Entgegenhaltungen:
- WO-A-2007/041955
- GB-A- 1 314 206
- JP-A- 2007 175 635
- US-A- 3 864 108
- US-A1- 2007 039 290
- US-A1- 2007 157 809

## Beschreibung

Die Erfindung betrifft ein Verfahren zum Rückspülen von Filtern aus dünnwandigen, textilen Filterkörpern durch Einsatz von Druckimpulsen in einem Spülluftstrom.

Filterkörper von Filtern, insbesondere von sehr großen industriell eingesetzten Filteranlagen, müssen in bestimmten Zeitabständen zur Erhaltung ihrer Filterfunktion gereinigt werden. Außerdem wird durch die Entfernung von ausgefilterten Stoffen von der Oberfläche des oder der Filterkörper ein im Betrieb am Filterkörper auftretender, unvermeidbarer Druckabfall verringert und damit die Funktion aufrechterhalten und die Betriebskosten gesenkt.

Bei bekannten Filtern mit textilen Filterkörpern in Form von Textilschläuchen geschieht dies durch einen Druckluftimpuls der die Textilschläuche durchläuft und dabei an der Außenwand dieser Textilschläuche angelagertes Filtergut löst. Das gelöste Filtergut kann dann ohne nennenswerten Zeit- und Energieaufwand entfernt werden. Solche Filter sind z.B. aus der GB 1,314,206 A, der WO 2007/041955 A1 und der US 2007/0039290 A1 bekannt.

Mit wachsender Anlagengröße von Filtern wächst jedoch auch die Nennweite eines Ventils von dem Druckimpulse freigegeben werden. Gleichzeitig mit der wachsenden Nennweite dieses Ventils wächst quasi unvermeidbar auch dessen Trägheit beim Öffnungsvorgang, so dass der Druckanstieg an der Vorderfront des von ihm freigesetzten Druckimpulses verlangsamt ist und dessen Reinigungswirkung nachlässt.

Aus der US 3,864,108 A ist ein Filter mit einer Vielzahl von textilen Filterkörpern bekannt. Die Filterkörper sind derart gruppiert, dass jeweils mehrere Filterkörper in eine gemeinsame obere Kammer münden. Jede der oberen Kammern ist mit zwei seitlichen Kanälen verbunden, die zu den Auslässen des Filters führen. In diesen seitlichen Kanälen ist jeweils eine Düse angeordnet, mittels derer Teildruckimpulse zur Reinigung der Filterkörper freigesetzt werden können. Die sich ausbreitenden Teildruckimpulse treten an entgegengesetzten Enden in die oberen Kammern ein und gelangen von dort in die Filterkörper, um diese zu Reinigen. Die Düsen werden mittels von Ventilen beaufschlagt, wobei die Ventile simultan angesteuert werden. Damit erreichen die freigesetzten Teildruckimpulse ungefähr zur gleichen Zeit die entgegengesetzten Enden der oberen Kammer.

Der Erfindung liegt nun die **Aufgabe** zugrunde besonders wirksame Druckimpulse zu erzeugen, die ein Ablösen des Filterguts und damit die Funktionssicherheit des Filters sicher gewährleisten.

Die Lösung der Aufgabe gelingt mit einem Verfahren gemäß den Merkmalen des Anspruchs 1. Weiterbildungen dieses Verfahrens sind durch die Merkmale der abhängigen Ansprüche gekennzeichnet.

Diese Aufgabe wird erfindungsgemäß durch Aufteilung der Funktion des einen Ventils zur Erzeugung von Druckimpulsen in mehrere kleine parallel geschaltete flinke Ventile erreicht, deren Öffnungszeitpunkte so aufeinander abgestimmt sind, dass die von Ihnen erzeugten Teilimpulse gleichzeitig am Eingang einer ihnen gemeinsamen Spülleitung ankommen. Durch die beim Öffnungsvorgang kleineren zu bewegenden Massen in den kleinen flinken Ventilen erfolgt der Druckanstieg zu Beginn der Impulse deutlich schneller als bei einem einzigen größeren Ventil, so dass die Funktion des Druckimpulses spürbar verbessert ist.

Bei dem aus der US 3,864,108 A bekannten Filter werden zwar auch mehrere Ventile zum Freisetzen von Teildruckimpulsen eingesetzt. Die Teildruckimpulse werden hier jedoch einfach simultan erzeugt und treten ferner an entgegengesetzten Enden in die obere Kammer ein, wo sie dann aufeinanderprallen. Die nach dem erfindungsgemäßen Verfahren erzeugten Druckimpulse haben demgegenüber den Vorteil, dass sie wesentlich dynamischer sind.

Als flinke Ventile dienen vorteilhafterweise Membranventile, die trotz extrem kurzer Öffnungszeit eine gute Struktur des Impulses in Druckanstieg, Druckhaltung und Druckabfall ermöglichen. Dabei beträgt die Gesamtzeit eines Impulses etwa 100 Millisekunden.

Zweckmäßigerweise werden mindestens zwei, jedoch auch beliebig viele flinke Ventile parallel geschaltet, die alle den selben Druckbehälter anzapfen. Die Ausgänge dieser Ventile führen als Entnahmeleitungen, beispielsweise unter einem spitzen Winkel in einem Hosenrohr zusammen, das von den Teilimpulsen synchron erreicht wird. Die Zeitdauer für Druckanstieg und Druckhaltung innerhalb desselben Impulses ist etwa gleich groß, kann aber auch bis zur doppelten Dauer der Anstiegszeit anwachsen.

Bei speziellen Anwendungen des Filters bei denen beispielsweise die Gefahr unerwünschter chemischer Reaktionen der zu filternden Stoffe mit dem Trägergas für den Druckimpuls besteht, wird die Druckluft vorteilhafterweise durch ein inertes Gas, beispielsweise Stickstoff, ersetzt.

Häufig sind in dem Filter eine Vielzahl von schlauchförmigen Filterkörpern parallel geschaltet und werden diese vorteilhafterweise einzeln oder in Gruppen nacheinander mit Druckimpulsen beaufschlagt. Um die Eintrittsöffnungen für die Druckimpulse im unteren Bereich der schlauchförmigen Filterkörper vor Verunreinigungen zu schützen, wird gelöstes Filtergut gegen die Stromrichtung des zu filternden Gemisches von den Filterkörpern entfernt.

Ein Ausführungsbeispiel der Erfindung mit drei Ventilen wird anhand einer Zeichnung näher erläutert. Im Einzelnen zeigen:
- Figur 1:: eine Anlage zur Durchführung des erfindungsgemäßen Verfahrens mit drei Ventilen
- Figur 2:: den zeitlichen Druckverlauf während eines Druckimpulses
- Figur 3:: den Querschnitt durch einen Filterkörper während des Filterbetriebs, und
- Figur 4:: den Querschnitt durch einen Filterkörper während der Abreinigung des Filtergutes vom Filterkörper.

Ein Druckluftbehälter 1 ist mit drei Entnahmeleitungen 4 für Druckluft versehen. Die Entnahmeleitungen 4 sind im Normalbetrieb durch Ventile 2 verschlossen. Von den Ventilen 2 zu einer Spülleitung 5 weiterführende Enden der Entnahmeleitungen 4 bilden die Kanten einer gleichseitigen Pyramide, deren Spitze in ein Hosenrohr 7 hineinragt, so dass die Entnahmeleitungen 4 mit gleichen Winkeln α untereinander in das Hosenrohr 7 münden. Das Hosenrohr 7 verbindet die Entnahmeleitungen 4 mit der Spülleitung 5 und endet in den oben offenen Enden von dünnwandigen textilen Filterkörpern 6, von denen lediglich der obere Teil dargestellt ist Die Ventile 2 werden jedes für sich von einem Steuergerät 3 geöffnet und geschlossen.

Wird nun beispielsweise über einen entsprechend großen Druckabfall an der Wandung der Filterkörper festgestellt, dass sich eine bestimmte Menge von Filtergut auf der Außenseite der Filterkörper 6 abgelagert hat, wird eine Spülung der Filterkörper 6 eingeleitet. Zu diesem Zweck werden die Ventile 2 jedes für sich gesteuert so geöffnet, dass dadurch ausgelöste Druckimpulse in den Entnahmeleitungen 4 gleichzeitig in der Spülleitung 5 ankommen und sich zu einem gemeinsamen Druckimpuls vereinigen, der durch die Spülleitung 5 in die Filterkörper 6 eingeleitet wird.

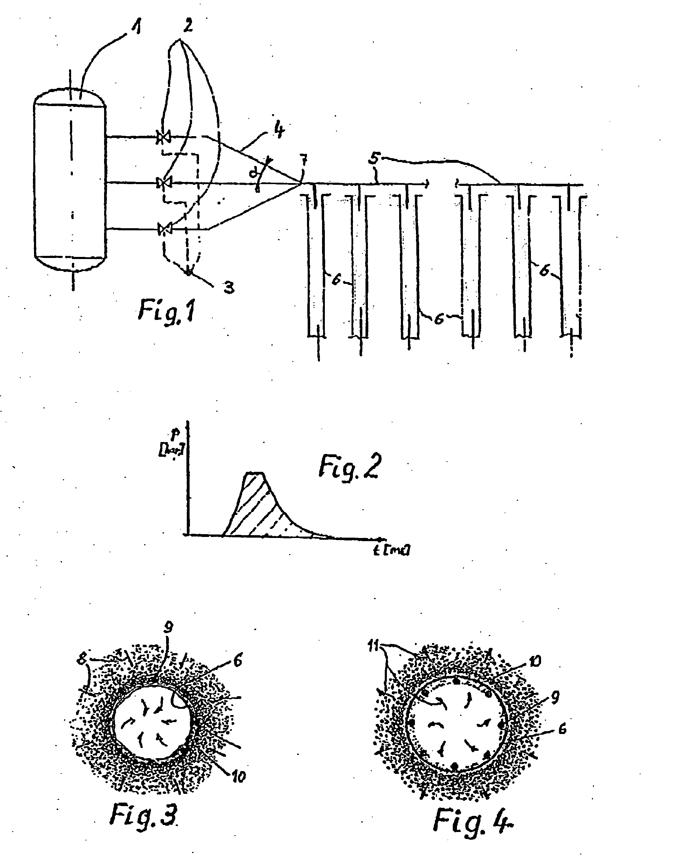

Die aus der Spülleitung austretenden Impulse haben eine in Figur 2 dargestellte Charakteristik und werden in die oben offenen Filterkörper 6 eingeleitet. Dabei werden in jeden einzelnen Druckimpuls für etwa 50 Millisekunden ein Druck von bis zu 100 Millibar erreicht, so dass an den Filterkörpern anhaftender Staub als Filtergut gelöst wird und dann ohne Schwierigkeiten entfernt werden kann.

Die Funktion der Filterkörper 6 wird anhand der Fig. 3 und 4 näher erläutert.

Während des in Fig. 3 dargestellten Filterbetriebs strömt das zu filternde Gemisch aus Luft, Gas und Staubpartikeln in Richtung der Pfeile 8 von außen gegen die Wandung des Filterkörpers 6. Dabei wird die aus Textilwerkstoff bestehende Wandung des Filterkörpers 6 nach innen gegen einen Stützkorb 9 gedrückt, so dass die Wandung des Filterkörpers nach innen gerichtete Mulden bildet. In diesen jeweils zwischen zwei Streben des Stützkörpers 9 liegenden Mulden sammelt sich der ausgefilterte Staub 10 und bildet eine in ihrer Stärke zunehmende Schicht.

Beim Erreichen der im Absatz [0013] angegebenen bestimmten Menge von Filtergut werden die Ventile 2 geöffnet, so dass die Strömungsrichtung in den Wandungen der Filterkörper 6 durch freigesetzte Druckimpulse, wie in Fig. 4 dargestellt, kurzzeitig umgekehrt wird. Diese Druckimpulse pressen die Wandungen der Filterkörper 6 nach außen und lösen dadurch und durch einen von ihnen verursachten Sprühgasstrom in Richtung der Pfeile 11 den Staub 10 von den Wandungen. Der Staub 10 fällt nach unten und kann von dort wie erwähnt ohne besonderen Aufwand entfernt werden.

## Patentansprüche

1. Verfahren zum Rückspülen von Filtern aus dünnwandigen textilen Filterkörpern (6) durch Einsatz von Druckimpulsen in einem Spülluftstrom,
**dadurch gekennzeichnet,**
**dass** zur Erzeugung der Druckimpulse mehrere kleine, flinke Ventile (2) jeweils kurzzeitig geöffnet werden, wobei die Ausgänge dieses Ventile (2) als Entnahmeleitungen in einem Hosenrols (7) Zusammengeführt werden, das von den Teilimpulsen synchron erreicht wird, und das die Entnahmeleitungen (4) mit einer Spülleitung (5) verbindet, und die Öffnungszeitpunkte so aufeinander abgestimmt sind, dass von ihnen freigesetzte Teilimpulse zeitgleich aus Eingang der ihnen gemeinsamen Spülleitung (5) ankommen.

2. Verfahren nach Anspruch 1,
**dadurch gekennzeichnet,**
**dass** als kleine, flinke Ventile (2) Membranventile dienen, die über Entnahmeleitungen (4) an einen Druckluftbehälter (1) angeschlossen sind.

3. Verfahren nach einem der Ansprüche 1 oder 2,
**dadurch gekennzeichnet,**
**dass** die Öffnungszeit der flinken Ventile (2) je Impuls insgesamt etwa 100 Millisekunden dauert.

4. Verfahren nach Anspruch 3,
**dadurch gekennzeichnet,**
**dass** drei flinke Ventile (2) zusammenwirken.

5. Verfahren nach Anspruch 4,
**dadurch gekennzeichnet,**
**dass** die flinken Ventile (2) ein und denselben Druckluftbehälter anzapfen.

6. Verfahren nach Anspruch 5,
**dadurch gekennzeichnet,**
**dass** die Teilimpulse in einem Hosenrohr (7) untereinander unter einem spitzen Winkel α zusammentreffen.

7. Verfahren nach Anspruch 6,
**dadurch gekennzeichnet,**
**dass** die Zeitdauer für den Druckanstieg des Impulses etwa gleich der Zeitdauer des Maximaldruckes während eines Impulses ist.

8. Verfahren nach Anspruch 7,
**dadurch gekennzeichnet,**
**dass** die Druckluft durch ein inertes Gas, beispielsweise Stickstoff, ersetzt ist.

9. Verfahren nach Anspruch 8,
**dadurch gekennzeichnet,**
**dass** der Filter eine Vielzahl von parallel geschalteten schlauchförmigen Filterkörpern (6) aufweist, die einzeln oder in Gruppen nacheinander mit Druckimpulsen beaufschlagt werden.

10. Verfahren nach Anspruch 9,
**dadurch gekennzeichnet,**
**dass** das Filtergut gegen die Stromrichtung des zu filternden Gemisches von den Filterkörpern (6) entfernt wird.

## Claims

1. Method for the backflushing of filters made of thin-walled textile filter bodies (6) using pressure pulses in a flushing air flow, **characterised in that**, for the generation of the pressure pulses, several small, quick-acting valves (2) are each briefly opened, wherein the outlets of these valves (2) meet as withdrawal lines in a Y-branch pipe (7) that is reached by the partial pulses synchronously and that is connected to the flushing line (5) via the withdrawal lines (5), the opening times being coordinated so that partial pulses released thereby arrive simultaneously at the inlet of the common flushing line (5).

2. Method according to claim 1, **characterised in that** the small, quick-acting valves (2) are diaphragm valves that are connected to a compressed air container (1) via withdrawal lines (4).

3. Method according to one of claims 1 or 2, **characterised in that** the total opening time of the quick-acting valves (2) is approximately 100 milliseconds per pulse.

4. Method according to claim 3, **characterised in that** three quick-acting valves (2) work together.

5. Method according to claim 4, **characterised in that** the quick-acting valves (2) tap the same compressed air container.

6. Method according to claim 5, **characterised in that** the partial pulses meet one another at an acute angle α in a Y-branch pipe (7).

7. Method according to claim 6, **characterised in that** the duration for the pressure increase of the pulse is approximately equal to the duration of the maximum pressure during a pulse.

8. Method according to claim 7, **characterised in that** the compressed air is replaced by an inert gas, for example nitrogen.

9. Method according to claim 8, **characterised in that** the filter comprises a plurality of tubular filter bodies (6) connected in parallel, which are successively acted on, individually or in groups, by pressure pulses.

10. Method according to claim 9, **characterised in that** the filtered material is removed from the filter bodies (6) against the direction of flow of the mixture to be filtered.

## Revendications

1. Méthode pour le rétrolavage de filtres composés de corps de filtres textiles à paroi mince (6) par l'utilisation d'impulsions de pressions dans un courant d'air de lavage, **caractérisée en ce que**, pour la génération des impulsions de pression, plusieurs petites valves à action rapide (2) sont respectivement ouvertes momentanément, les sorties des ces valves (2) se joignant en tant que lignes de prise dans un tuyau en Y (7), qui est atteint par les impulsions partielles de manière synchrone et qui réunit les lignes de prise (4) avec une ligne de lavage (5), et les temps d'ouverture sont coordonnés de façon à ce que les impulsions partielles dégagées arrivent simultanément à l'entrée de la ligne de lavage (5) commune.

2. Méthode selon la revendication 1, **caractérisée en ce que** les petites valves à action rapide (2) sont des valves à membrane, qui sont rattachées par les lignes de prise (4) à un réservoir d'air comprimé (1).

3. Méthode selon la revendication 1 ou 2, **caractérisée en ce que** le temps d'ouverture total des valves à action rapide (2) est environ 100 millisecondes par impulsion.

4. Méthode selon la revendication 3, **caractérisée en ce que** trois valves à action rapide (2) ont une action conjointe.

5. Méthode selon la revendication 4, **caractérisée en ce que** les valves à action rapide (2) tirent du même réservoir d'air comprimé.

6. Méthode selon la revendication 5, **caractérisée en ce que** les impulsions partielles se rencontrent l'une l'autre à un angle aigu α dans un tuyau en Y (7).

7. Méthode selon la revendication 6, **caractérisée en ce que** la durée pour une remontée de pression de l'impulsion équivaut approximativement à la durée de la pression maximale pendant une impulsion.

8. Méthode selon la revendication 7, **caractérisée en ce que** l'air comprimé est remplacé par un gaz inerte, par exemple le nitrogène.

9. Méthode selon la revendication 8, **caractérisée en ce que** le filtre présente une pluralité de corps de filtre (6) tubulaires connectés en parallèle, qui, individuellement ou en groupes, sont successivement alimentés en impulsions de pression.

10. Méthode selon la revendication 9, **caractérisée en ce que** le matériau filtré est enlevé des corps de filtre à l'encontre du sens de l'écoulement du mélange à filtrer.
